# EUROPÄISCHE PATENTANMELDUNG

(11) **EP 1 500 492 A2**
(43) Veröffentlichungstag der Anmeldung: **26.01.2005**
(21) Anmeldenummer: 04010071.1
(22) Anmeldetag: 28.04.2004
(51) Int. Cl.: B32B 5/18, B32B 5/26, B32B 31/00

(54) **Textiles Flächengebilde und Verfahren zu dessen Herstellung**

(30) Priorität: 29.04.2003 DE 10319416
(71) Anmelder: Gaenslen & Völter GmbH & Co. KG, 72555 Metzingen (DE)
(72) Erfinder: Kauderer, Hans-Joachim, 72768 Reutlingen (DE)
(74) Vertreter: Lindner, Michael, Dipl.-Ing.

(57) **Zusammenfassung**

Die Erfindung betrifft ein textiles Flächengebilde mit einer ersten flächigen textilen Lage (13) und einer zweiten flächigen Lage (20) aus einem Vliesmaterial, wobei beide Lagen miteinander verbunden sind. Bei diesem Flächengebilde ist eine dritte Lage (30) aus einem Schaumstoff (Schaumstoff-Lage) zwischen der ersten und der zweiten Lage (13, 20) vorgesehen, wobei die Schaumstoff-Lage (30) auf minimale Dicke abgebrannt (flammkaschiert) ist. Die Erfindung betrifft ferner ein Verfahren zur Herstellung eines solchen Flächengebildes.

## Beschreibung

Die vorliegende Erfindung betrifft ein textiles Flächengebilde mit einer ersten flächigen textilen Lage und einer zweiten flächigen Lage aus einem Vliesmaterial, wobei beide Lagen miteinander verbunden sind. Die Erfindung betrifft ferner ein Verfahren zur Herstellung eines solchen textilen Flächengebildes.

Textile Flächengebilde sind flächige Waren, die aus textilen Rohstoffen, wie Fasern oder Fäden, erzeugt sind. In DE 41 16 040 ist bspw. ein textiles Flächengebilde offenbart. Solche flächigen Waren werden in den unterschiedlichsten Bereichen eingesetzt, wobei nachfolgend einer dieser Bereiche beispielhaft herausgegriffen wird.

Im Automobilbereich werden textile Flächengebilde an den unterschiedlichsten Stellen im Innenraum eines Fahrzeugs verwendet. Sie werden nicht nur als Bezugsstoff für Sitze eingesetzt, sondern beispielsweise auch für den Bezug von Türmittelfeldern, Sidebagabdeckungen, Kopfstützen und Armauflagen.

Um u.a. einen weichen Griff des Bezugsstoffs zu erreichen, wird der Stoff mit einem Schaumstoffmaterial verklebt. Neben diesen Schaumstoffmaterialien kommen zunehmend auch sog. Vliese zum Einsatz, die gegenüber Schaumstoffen beispielsweise bessere luftdurchlässigkeits- und feuchtigkeitsaufnehmende Eigenschaften besitzen, die gerade bei Sitzbezügen eine große Rolle spielen. Beispiele von solchen mit Schaumstoff kaschierten Stoffen sind in DE 199 53 111 A1 oder DE 41 17 709 C1 offenbart.

Vliese haben üblicherweise eine ungeordnete nicht ebene Oberfläche bzw. Struktur, die beim Verkleben mit einer Gewebe- bzw. Stoffbahn an deren Oberfläche unerwünschte Mikro- und Makrofalten bzw. ein unruhiges Bild der Oberfläche verursacht. Dies liegt daran, dass sich die ungeordnete Struktur auf die darüber liegende Gewebe- bzw. Stoffbahn überträgt.

Darüber hinaus kann es bei einem solchen textilen Flächengebilde bestehend aus zwei textilen flächigen Lagen zu Knickfalten bei längerer Belastung kommen, was gerade bei der Verwendung als Autositzbezug nicht vorteilhaft ist.

Vor diesem Hintergrund besteht die Aufgabe der vorliegenden Erfindung darin, ein textiles Flächengebilde der vorgenannten Art so weiterzubilden, dass die Entstehung von Mikro- und Makrofalten sowie von Knickfalten bei Dauerbelastung reduziert wird. Darüber hinaus soll ein ruhigeres Warenbild, eine bessere Drapierbarkeit sowie ein schönerer weicherer Griff erzielt werden.

Die der Erfindung zugrunde liegende Aufgabe wird bei dem eingangs genannten textilen Flächengebilde dadurch gelöst, dass eine dritte Lage aus einem Schaumstoff (Schaumstoff-Lage) zwischen der ersten und der zweiten Lage vorgesehen ist, wobei die Schaumstoff-Lage auf minimale Dicke abgebrannt ist.

Das heißt mit anderen Worten, dass bei der Herstellung des textilen Flächengebildes eine Schaumstoff-Lage vorgesehen wird, die bedingt durch eine Wärmebehandlung im fertiggestellten Zustand jedoch kaum noch zu erkennen ist.

Die abgebrannte Schaumstoff-Lage führt zu einer "Entkopplung" der ersten und der zweiten flächigen Lage mit dem Erfolg, dass sich die Struktur des Vliesmaterials nicht mehr auf die erste Lage überträgt.

Damit wird in vorteilhafter Weise ein textiles Flächengebilde geschaffen, das ein ruhigeres Warenbild liefert, wobei die Entstehung von Mikro- und Makrofalten deutlich reduziert ist. Darüber hinaus kommt es auch nicht zu unerwünschten Knickfalten bei Dauerbelastung. Schließlich liefert das erfindungsgemäße Flächengebilde eine bessere Drapierbarkeit und besitzt einen schönen weichen, fließenden Griff.

Vorzugsweise ist die erste Lage ein flächiges Gewebe aus Naturfasern, beispielsweise ein Wollstoff. Darüber hinaus kann die erste Lage auch ein Mikrofaservlies sein.

Bei dem Vliesmaterial handelt es sich vorzugsweise um ein Flachvlies, ein Vertikalvlies oder ein Nadelvlies.

Wie bereits erwähnt werden solche textile Flächengebilde besonders vorteilhaft als Bezugsstoffe eingesetzt, insbesondere als Bezugsstoffe in Fahrzeugen.

In einer bevorzugten Weiterbildung besteht die Schaumstoff-Lage aus einem PUR-Schaumstoff.

Dieses Material hat sich als besonders vorteilhaft nicht nur hinsichtlich seiner Eigenschaften, sondern auch seiner Kosten herausgestellt.

Die der Erfindung zugrunde liegende Aufgabe wird auch von einem Verfahren zur Herstellung eines textilen Flächengebildes gelöst, das durch die folgenden Schritte gekennzeichnet ist:
- Aufbringen einer Schaumstoff-Lage auf eine Seite einer ersten flächigen textilen Lage;
- Reduzieren der Dicke der Schaumstoff-Lage auf einen minimalen Wert durch Zuführen von Wärme;
- Aufbringen einer zweiten flächigen textilen Lage auf die eine Seite der ersten Lage.

Das heißt mit anderen Worten, dass zunächst eine Schaumstoff-Lage auf eine Seite der ersten flächigen textilen Lage vollflächig aufgebracht wird und anschließend bis auf einen minimalen Wert abgebrannt wird. Anschließend wird dann auf diesen nun als Klebstoff dienenden Schaumstoff-Rest die zweite flächige textile Lage, vorzugsweise in Form eines Vliesmaterials vollflächig aufgebracht.

Es hat sich als besonders vorteilhaft herausgestellt, wenn die Schaumstoff-Lage durch Abbrennen (Flammkaschieren) auf die gewünschte reduzierte Dicke gebracht wird. Es ist jedoch selbstverständlich auch möglich, auch andere Formen der Wärmezuführung zur Erzielung der gleichen Wirkung einzusetzen.

Vorzugsweise besteht die Schaumstoff-Lage aus einem PUR-Schaumstoff, der vorzugsweise eine Dicke von 1,3 bis 2 mm im nichtabgebrannten Zustand besitzt. Nach dem Abbrennen der Schaumstoff-Lage ist diese als solche kaum noch zu erkennen. Allerdings bleibt ihre Wirkung im Hinblick auf die Entkopplung von erster textiler Lage und zweiter textiler Lage weiterhin bestehen, was gerade die vorgenannten Vorteile im Hinblick auf Mikro- und Makrofaltenbildung sowie Knickfaltenbildung liefert.

Weitere Vorteile und Ausgestaltungen der Erfindung ergeben sich aus der Beschreibung und der beiliegenden Zeichnung.

Die Erfindung wird nun an Hand eines Ausführungsbeispiels mit Bezug auf die Zeichnung beispielhaft beschrieben. Dabei zeigen:
- Fig. 1: eine schematische Darstellung eines erfindungsgemäßen textilen Flächengebildes; und
- Fig. 2: eine schematische Darstellung eines Zwischenprodukts bei der Herstellung des erfindungsgemäßen Flächengebildes.

Nachfolgend wird die Erfindung an Hand eines Ausführungsbeispiels detailliert erläutert. Dabei sei als textiles Flächengebilde ein Gewebe angenommen, das aus Naturfasern gefertigt ist. Es versteht sich jedoch, dass sich die Erfindung nicht auf solche Gewebe beschränkt, sondern auch bei anderen textilen Flächengebilden wie Gewirken, Vliesen oder beispielsweise mit Polyurethan verfestigten Mikrofaservliesen anwendbar ist.

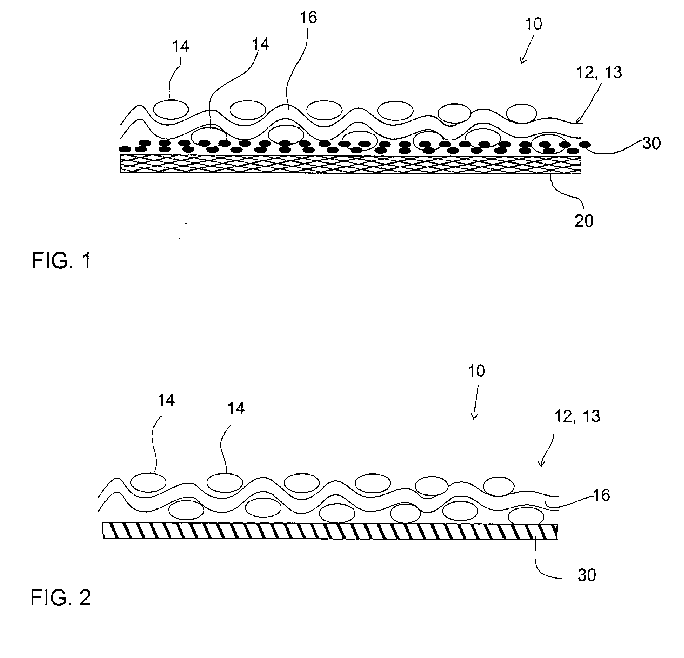

In Fig. 1 ist ein textiles Flächengebilde dargestellt und mit dem Bezugszeichen 10 gekennzeichnet. Das textile Flächengebilde 10 bildet im vorliegenden Ausführungsbeispiel einen gewebten Bezugsstoff. Zu erkennen sind in Fig. 1 schematisch angedeutete Schussfäden 14 und ein Kettenfaden 16. Das Gewebe bzw. der gewebte Bezugsstoff 12 bildet eine erste textile flächige Lage 13, die etwa eine Dicke von 1 mm besitzt und als Bahnware hergestellt wird.

Wie bereits erwähnt kann die textile flächige Lage 13 auch ein mit Polyurethan verfestigtes Mikrofaservlies sein.

Um beispielsweise im Automobilbereich als Bezugsstoff verwendet werden zu können, ist an der Unterseite der ersten textilen flächigen Lage 13 eine zweite textile flächige Lage 20 angebracht. Bei dieser zweiten flächigen Lage handelt es sich im vorliegenden Ausführungsbeispiel um ein Vlies, beispielsweise ein Nadelvlies oder ein doppelt vermaschtes Vlies, wie Double Knit oder Caliweb®.

Zwischen der ersten Lage 13 und der zweiten Lage 20 ist in Fig. 1 eine dritte Lage 30 zu erkennen, die beispielsweise aus einem PUR-Schaumstoff besteht. Diese Schaumstoff-Lage 30 ist jedoch kaum sichtbar, da sie nahezu vollständig durch Flammkaschierung abgebrannt ist.

In Fig. 2 ist das textile Flächengebilde 10 in einem nicht fertigen Zustand gezeigt. Hier ist die Schaumstoff-Lage 30 noch als 1,3 bis 2 mm dicke Schicht zu erkennen, die auf der Unterseite der ersten Lage 13 vollflächig aufgebracht ist.

Die Schaumstoff-Lage 30 wird erst danach so stark erhitzt, dass nur mehr ein abgebrannter Rest übrig bleibt. Auf Grund der Klebeeigenschaft des mit Wärme behandelten Schaumstoffs lässt sich die zweite flächige Lage 20 sehr gut auf der ersten Lage 13 anbringen.

Obgleich die dritte Lage 30 im fertig hergestellten Produkt 10 kaum noch zu erkennen ist, führt diese Lage dennoch zu einer "Entkopplung" der ersten Lage 13 und der zweiten Lage 20. Das bedeutet, dass sich die ungeordnete Struktur des Vliesmaterials der zweiten Lage 20 nicht auf die erste Lage 13 überträgt, was bisher bei einem normalen Verkleben der beiden Lagen der Fall war. Damit entsteht ein sehr viel ruhigeres Bild an der Oberseite der ersten Lage 13 und es bilden sich deutlich weniger Mikro- und Makrofalten. Darüber hinaus entstehen auch kaum Knickfalten bei einer Dauerbelastung des textilen Flächengebildes 10.

Das textile Flächengebilde 10 kann insbesondere im Automobilbereich als Autositzbezug, Türmittelfeldbezug, als Sidebackabdeckung, als Kopfstützenbezug oder als Armauflagenbezug verwendet werden. Darüber hinaus sind selbstverständlich auch andere Anwendungsmöglichkeiten außerhalb des Automobilbereichs, beispielsweise als Möbelpolsterbezug, denkbar.

Das beschriebene textile Flächengebilde 10 kann beispielsweise als erste Lage 13 ein Mikrofaservlies des Typs Amaretta® und als zweite Lage 20 ein Vlies, beispielsweise Double Knit oder Caliweb® oder ein Nadelvlies aufweisen. Bei der dritten Lage handelt es sich vorzugsweise um einen PUR-Schaumstoff (ca. 28 RG).

Neben den bereits genannten Vorteilen des erfindungsgemäßen textilen Flächengebildes hat sich herausgestellt, dass im Einzelfall sogar das Brennverhalten verbessert wird, so dass der Einsatz von Flammschutzmitteln innerhalb des textilen Flächengebildes 10 und in den einzelnen Lagen 13, 20 selbst verringert werden kann.

## Patentansprüche

1. Textiles Flächengebilde mit einer ersten flächigen textilen Lage (13) und einer zweiten flächigen Lage (20) aus einem Vliesmaterial, wobei beide Lagen miteinander verbunden sind, **dadurch gekennzeichnet, dass** eine dritte Lage (30) aus einem Schaumstoff (Schaumstoff-Lage) zwischen der ersten und der zweiten Lage (13, 20) vorgesehen ist, wobei die Schaumstoff-Lage (30) auf minimale Dicke abgebrannt (flammkaschiert) ist.

2. Textiles Flächengebilde nach Anspruch 1, **dadurch gekennzeichnet, dass** die erste Lage (13) ein flächiges Gewebe aus Naturfasern ist.

3. Textiles Flächengebilde nach Anspruch 1, **dadurch gekennzeichnet, dass** die erste Lage (13) ein Mikrofaservlies ist.

4. Textiles Flächengebilde nach einem der vorhergehenden Ansprüche, **dadurch gekennzeichnet, dass** das Vliesmaterial der zweiten Lage (20) ein Flachvlies, ein Vertikalvlies oder ein Nadelvlies ist.

5. Textiles Flächengebilde nach einem der vorhergehenden Ansprüche, **dadurch gekennzeichnet, dass** das Flächengebilde (10) ein Bezugsstoff ist, insbesondere zur Verwendung in Fahrzeugen.

6. Textiles Flächengebilde nach einem der vorhergehenden Ansprüche, **dadurch gekennzeichnet, dass** die Schaumstoff-Lage (30) aus einem PUR-Schaumstoff besteht.

7. Verfahren zur Herstellung eines textilen Flächengebildes (10), insbesondere eine Flächengebildes nach einem der Ansprüche 1 bis 6, **gekennzeichnet durch** die Schritte:
- Aufbringen einer Schaumstoff-Lage (30) auf eine Seite einer ersten flächigen textilen Lage (13);
- Reduzieren der Dicke der Schaumstoff-Lage (30) auf einen minimalen Wert **durch** Zuführen von Wärme;
- Aufbringen einer zweiten flächigen textilen Lage (20) auf die eine Seite der ersten Lage (13).

8. Verfahren nach Anspruch 7, **dadurch gekennzeichnet, dass** die erste Lage (13) ein Gewebe oder ein Mikrofaservlies ist.

9. Verfahren nach Anspruch 7 oder 8, **dadurch gekennzeichnet, dass** die zweite Lage (20) ein Vlies ist.

10. Verfahren nach einem der Ansprüche 7 bis 9, **dadurch gekennzeichnet, dass** das Reduzieren der Dicke der Schaumstoff-Lage (30) durch Abbrennen (Flammkaschieren) erfolgt.

11. Verfahren nach einem der Ansprüche 7 bis 10, **dadurch gekennzeichnet, dass** die Schaumstoff-Lage (30) aus einem PUR-Schaumstoff besteht.

12. Verfahren nach einem der Ansprüche 7 bis 11, **dadurch gekennzeichnet, dass** die Schaumstoff-Lage (30) mit einer Dicke von 1,3 bis 2 mm aufgebracht wird.
